# EUROPÄISCHE PATENTSCHRIFT

(11) **EP 2 169 316 B1**
(45) Veröffentlichungstag und Bekanntmachung des Hinweises auf die Patenterteilung: **15.02.2017**
(21) Anmeldenummer: 09011905.8
(22) Anmeldetag: 18.09.2009
(51) Int. Cl.: F24D 3/14

(54) **Mehrschichtige Platte und Wärmeleitplatte**
Multi-layered plate and heat conduction plate
Plaque multicouche et plaque thermique

(30) Priorität: 25.09.2008 EP 08016842; 26.01.2009 DE 202009000976 U
(43) Veröffentlichungstag der Anmeldung: 31.03.2010
(73) Patentinhaber: Roth Werke GmbH, 35232 Dautphetal (DE)
(72) Erfinder:
(74) Vertreter: Rohmann, Michael

(56) Entgegenhaltungen:
- EP-A2- 1 912 025
- WO-A1-02/37032
- DE-A1- 1 454 468
- DE-A1- 2 819 385

## Beschreibung

Die Erfindung betrifft eine mehrschichtige Platte zum Heizen und/oder Kühlen von Gebäuden, wobei zumindest eine Wärmeleitplatte aus einem Material hoher Wärmeleitfähigkeit vorgesehen ist, wobei die Wärmeleitplatte zumindest einen Kanal für die Aufnahme zumindest eines Rohres für ein Wärmeträgermedium aufweist und wobei die Wärmeleitplatte mit ihrer Rückseite an eine Isolierplatte angeschlossen ist bzw. in eine Isolierplatte eingebettet ist. - Die erfindungsgemäßen mehrschichtigen Platten sind für die Aufnahme von Rohren für ein Wärmeträgermedium vorgesehen. Die mehrschichtigen Platten können insbesondere an Wänden und/oder Decken eines Gebäudes bzw. Gebäuderaumes montiert werden. Die Platten können aber auch auf Böden von Gebäuden verlegt bzw. montiert werden und sind dann Bestandteil einer Fußbodenheizung.

Mehrschichtige Platten der eingangs genannten Art sind aus der Praxis in verschiedenen Ausführungsformen bekannt. Bei diesen bekannten Platten ist eine einfache problem- und zwangfreie Montage der Rohre an den Platten nicht immer möglich. Beim Einbringen der Rohre können die Platten insbesondere beschädigt werden. Andererseits ist bei vielen bekannten Platten ein funktionssicherer Halt der Rohre an den Platten nicht immer gewährleistet.

Aus WO 02/37032 A1 ist eine modulare Verlegeplatte aus thermoisolierendem Material zum Verlegen in Fußboden- oder Wandheizsystemen bekannt. Diese Verlegeplatte weist Kanäle zur Aufnahme von Rohren bzw. Wärmeleitungs-rohren auf. Weiterhin ist die modulare Verlegeplatte mit Wärmeleitblech-elementen kombinierbar, die Mulden aufweisen, welche in die Kanäle der Verlegeplatte eingreifen können. Die Kanäle für die Rohre können Rastnasen aufweisen. Diese Rastnasen sind jedoch nur an einer Seite des Kanals und nur in bogenförmigen Abschnitten des Kanals vorgesehen. Im Ergebnis lässt die Stabilität bzw. Festigkeit eines Aggregates aus Verlegeplatte, Wärmeleitblechen und Rohren zu wünschen übrig, so dass insbesondere eine Montage großflächiger Aggregate nicht ohne weiteres und ohne Probleme möglich ist. Auch ein funktionssicherer Halt der Rohre in den Kanälen bzw. in den Mulden ist nicht gewährleistet. Die Montage der Aggregate an Wänden oder Decken ist problematisch.

Demgegenüber liegt der Erfindung das technische Problem zugrunde, eine mehrschichtige Platte der eingangs genannten Art anzugeben, mit der eine einfache, problemlose und zwangfreie Montage der Rohre möglich ist und die einen funktionssicheren Halt der Rohre sicherstellt.

Zur Lösung des technischen Problems lehrt die Erfindung eine mehrschichtige Platte der eingangs genannten Art, die dadurch gekennzeichnet ist, dass der zumindest eine Kanal der Wärmeleitplatte an seinen gegenüberliegenden Kanalwandungen

entweder jeweils eine Mehrzahl von Rastnasen für eine verrastende Aufnahme bzw. Rastaufnahme des zumindest einen Rohres aufweist, oder die Rastnasen an der Isolierplatte vorgesehen sind bzw. Bestandteile der Isolierplatte sind und durch in den Kanalwandungen eines Kanales vorgesehene Durchgriffsöffnungen in den Kanal ragen,
wobei die Rastnasen an der einen Kanalwandung versetzt zu den Rastnasen der gegenüberliegenden Kanalwandung angeordnet sind und wobei die Wärmeleitplatte zumindest 60% der Oberfläche der Isolierplatte abdeckt.

Nach einer bevorzugten Ausführungsform weist die Wärmeleitplatte eine Mehrzahl von Kanälen für die Aufnahme von Rohren für ein Wärmeträgermedium auf und die Kanäle weisen an ihren gegenüberliegenden Kanalwandungen die Mehrzahl von Rastnasen bzw. jeweils eine Mehrzahl von Rastnasen für die verrastende Aufnahme bzw. Rastaufnahme der Rohre auf.

Die erfindungsgemäßen mehrschichtigen Platten können im montierten Zustand sowohl zum Heizen als auch zum Kühlen eines Gebäudes bzw. eines Raumes in einem Gebäude eingesetzt werden. Die Platten eignen sich vor allem für die Montage an Wänden und/oder Decken von Räumen. Grundsätzlich können die erfindungsgemäßen Platten aber auch auf dem Boden eines Raumes bzw. eines Gebäudes verlegt werden.

Dass die Wärmeleitplatte aus einem Material hoher Wärmeleitfähigkeit besteht, meint insbesondere, dass die Wärmeleitplatte eine höhere bzw. eine deutlich höhere Wärmeleitfähigkeit aufweist, als die Isolierplatte. Nach sehr bevorzugter Ausführungsvariante der Erfindung ist die Isolierplatte als Schaumkunststoffplatte ausgebildet. Empfohlenermaßen ist einer Isolierplatte bzw. Schaumkunststoffplatte einer mehrschichtigen Platte lediglich eine Wärmeleitplatte zugeordnet. Bei dem Wärmeträgermedium handelt es sich um ein fluides Medium, vorzugsweise um ein flüssiges Medium, insbesondere um Wasser.

Es liegt im Rahmen der Erfindung, dass die Rastnasen gleichsam als Hinterschnitte in den gegenüberliegenden Kanalwandungen eines Kanals ausgebildet sind. Nach einer Alternative der Erfindung weist jede der beiden gegenüberliegenden Kanalwandungen eines Kanals eine Mehrzahl von Rastnasen aufweist. Die Rastnasen sind in Längsrichtung des zugeordneten Kanals verteilt angeordnet und zweckmäßigerweise in Längsrichtung hintereinander angeordnet bzw. fluchtend hintereinander angeordnet. Es empfiehlt sich, dass die Rastnasen im Bereich des oberen Randes der Kanäle angeordnet sind. Vorzugsweise beträgt der Abstand a der Rastnasen von der außerhalb der Kanäle vorhandenen Oberfläche der Wärmeleitplatte 0,2 bis 6 mm, bevorzugt 0,3 bis 5 mm und sehr bevorzugt 0,4 bis 4,5 mm. Mit Hilfe der erfindungsgemäßen Rastnasen kann eine effektive Rastverbindung der Rohre mit der Wärmeleitplatte bzw. mit der mehrschichtigen Platte erreicht werden.

Eine sehr bevorzugte Ausführungsform, der im Rahmen der Erfindung ganz besondere Bedeutung zukommt, ist dadurch gekennzeichnet, dass die mehrschichtigen Platten werksseitig ohne eingepasste Rohre gefertigt sind und dass die Einbringung bzw. Einpassung der Rohre in die Kanäle der Platten am Montageort der Platten vorgesehen ist. Gemäß empfohlener Ausführungsvariante erfolgt die Einbringung der Rohre in die Kanäle nach der Positionierung bzw. Fixierung der Platten an einer Wand oder einer Decke eines Raumes oder auch am Boden eines Raumes. Der Erfindung liegt insoweit die Erkenntnis zugrunde, dass insbesondere die Einbringung der Rohre in die Kanäle von bereits an Wänden oder Decken positionierten bzw. fixierten Platten problemlos und zwangfrei und vor allem beschädigungsfrei möglich ist.

Bei dem Material hoher Wärmeleitfähigkeit für die Wärmeleitplatte handelt es sich vorzugsweise um ein Metall und/oder um Kohlenstoff, insbesondere um Graphit. Gemäß einer bevorzugten Ausführungsform wird für das Material hoher Wärmeleitfähigkeit für die Wärmeleitplatte zumindest ein Metall aus der Gruppe "Aluminium, Stahl, Kupfer" ausgewählt. Nach einer empfohlenen Ausführungsvariante wird eine Wärmeleitplatte aus Aluminium bzw. ein Aluminiumblech als Wärmeleitplatte eingesetzt. Die Wärmeleitplatte kann unter anderem als Blech oder auch als Folie ausgebildet sein. Die Dicke der Wärmeleitplatte beträgt zweckmäßigerweise 0,1 bis 2 mm, bevorzugt 0,2 bis 1,5 mm und sehr bevorzugt 0,3 bis 0,7 mm.

Vorzugsweise deckt die zumindest eine Wärmeleitplatte zumindest den größten Teil der darunter angeordneten Isolierplatte bzw. Schaumkunststoffplatte ab. Größter Teil meint hier insbesondere zumindest 60 %, zweckmäßigerweise zumindest 70 %, bevorzugt zumindest 75 % und sehr bevorzugt zumindest 80 % der Oberfläche der Isolierplatte bzw. Schaumkunststoffplatte. - Die Isolierplatte bzw. Schaumkunststoffplatte besteht nach bevorzugter Ausführungsform aus schäumbarem Polystyrol (EPS). Zweckmäßigerweise beträgt die Dicke der Isolierplatte bzw. Schaumkunststoffplatte 15 bis 50 mm und vorzugsweise 20 bis 40 mm. Diese Dicke bezieht sich bei vorhandenen und weiter unten noch erwähnten Aufnahmekanälen in der Schaumkunststoffplatte auf die Bereiche außerhalb der Aufnahmekanäle.

Es liegt im Rahmen der Erfindung, dass die Kanäle für die Aufnahme der Rohre in die Wärmeleitplatte eingeformt sind bzw. aus der Wärmeleitplatte ausgeformt sind und somit die Kanäle aus dem gleichen Material bestehen wie die Wärmeleitplatte. Vorzugsweise sind die Kanäle mit der Maßgabe ausgelegt, dass sie die Rohre vollständig aufnehmen. Bei dieser Ausführungsform ragt also kein Rohrbestandteil aus dem zugeordneten Kanal heraus.

Es liegt fernerhin im Rahmen der Erfindung, dass die beiden gegenüberliegenden Kanalwandungen eines Kanals parallel bzw. im Wesentlichen parallel zueinander sind. Zweckmäßigerweise beträgt der Abweichungswinkel von der exakt parallelen Orientierung der beiden Kanalwände insgesamt maximal 4°, vorzugsweise maximal 3°, bevorzugt maximal 2° und besonders bevorzugt maximal 1°. Nach empfohlener Ausführungsvariante weist ein Kanal einen halbkreisförmigen Kanalboden bzw. einen im Wesentlichen halbkreisförmigen Kanalboden und in den Bereichen außerhalb der Rastnasen parallele bzw. im Wesentlichen parallele gegenüberliegende Kanalwandungen auf. Es liegt im Rahmen der Erfindung, dass die Einrastung bzw. Verrastung der Rohre in den Kanälen ausschließlich bzw. im Wesentlichen durch die Rastnasen an den Kanalwandungen erreicht werden. Dann trägt die Anordnung bzw. Orientierung der gegenüberliegenden Kanalwandungen außerhalb der Rastnasen nicht oder quasi nicht zur Verrastung der Rohre in den Kanälen bei.

Gemäß einer Ausführungsform weist eine Wärmeleitplatte eine Mehrzahl von Kanälen auf. Mehrzahl meint dabei zumindest zwei Kanäle, vorzugsweise zumindest drei Kanäle, bevorzugt zumindest vier Kanäle und besonders bevorzugt zumindest fünf Kanäle. Es liegt im Rahmen der Erfindung, dass eine Wärmeleitplatte eine Mehrzahl von zueinander parallelen linearen bzw. geradlinigen Kanälen für das Rohr bzw. für die Rohre aufweist.

Es liegt fernerhin im Rahmen der Erfindung, dass die erfindungsgemäßen Rastnasen aus der Wärmeleitplatte bzw. aus den Kanalwandungen ausgeformt sind. Die Rastnasen bestehen dann also aus dem Material der Wärmeleitplatte und sind quasi einstückig aus der Wärmeleitplatte ausgeformt.

Nach einer anderen Ausführungsform der Erfindung sind die Rastnasen an die Isolierplatte angeschlossen bzw. sind die Rastnasen Bestandteile der Isolierplatte und ragen durch in den Kanalwandungen eines Kanals vorgesehene Durchgriffsöffnungen in den Kanal. Vorzugsweise greifen dabei die Rastnasen jeweils formschlüssig oder im Wesentlichen formschlüssig in die Durchgriffsöffnungen der Kanalwandungen ein.

Erfindungsgemäß sind die Rastnasen an der einen Kanalwandung eines Kanals versetzt zu den Rastnasen der gegenüberliegenden Kanalwandung dieses Kanals angeordnet. Die versetzte Anordnung bezieht sich dabei insbesondere auf die Längsrichtung bzw. Längserstreckung des Kanals. Vorzugsweise ist zumindest ein Teil der Rastnasen an der einen Kanalwandung eines Kanals jeweils in der Mitte bzw. etwa in der Mitte des Abstandes zweier Rastnasen der gegenüberliegenden Kanalwandung dieses Kanals angeordnet. Empfohlenermaßen weisen die Rastnasen an einer Kanalwandung bzw. an jeder der beiden gegenüberliegenden Kanalwandungen eines Kanals bezüglich der Längserstreckung des Kanals einen gegenseitigen Abstand von 30 bis 90 mm, vorzugsweise von 40 bis 80 mm, bevorzugt von 50 bis 70 mm und sehr bevorzugt von 55 bis 65 mm, beispielsweise 60 mm auf.

Es empfiehlt sich, dass die Rastnasen in Längsrichtung des zugeordneten Kanals eine Länge von 5 bis 10 mm, vorzugsweise von 8 bis 10 mm aufweisen. Zweckmäßigerweise beträgt der Abstand der Kanalwandungen in den Bereichen außerhalb der Rastnasen 5 bis 25 mm, bevorzugt 7 bis 20 mm und sehr bevorzugt 8 bis 18 mm. Empfohlenermaßen beträgt die Höhe h der Rastnasen in Richtung zur Kanalmitte hin 0,4 bis 1,2 mm, vorzugsweise 0,5 bis 1,1 mm und bevorzugt 0,6 bis 1,0 mm. Zweckmäßigerweise liegt auch die Tiefe t der Rastnasen in Richtung parallel zur zugeordneten Kanalwand in den zur Höhe h genannten Bereichen.

Es liegt im Rahmen der Erfindung, dass die Kanäle für die Rohre aus der Rückseite der Wärmeleitplatte vorspringen und in Aufnahmekanäle eingreifen, die in der Vorderseite der Isolierplatte bzw. Schaumkunststoffplatte vorgesehen sind. Nach dieser Ausführungsform ragen also die Kanäle aus der rückseitigen Oberfläche der Wärmeleitplatte hervor und greifen in komplementäre Aufnahmekanäle der Isolierplatte bzw. Schaumkunststoffplatte ein. Zweckmäßigerweise liegt die rückseitige Oberfläche der Wärmeleitplatte in den Bereichen außerhalb der Kanäle bzw. Aufnahmekanäle flächig an der vorderseitigen Oberfläche der Isolierplatte bzw. Schaumkunststoffplatte an.

Nach empfohlener Ausführungsform der Erfindung weist die Wärmeleitplatte zumindest eine Sollbruchstelle auf, die bevorzugt linienförmig bzw. geradlinig ausgebildet ist. Vorzugsweise verläuft die zumindest eine Sollbruchstelle senkrecht bzw. im Wesentlichen senkrecht zu den Kanälen der Wärmeleitplatte. Zweckmäßigerweise weist die Isolierplatte bzw. Schaumkunststoffplatte eine mit der Sollbruchstelle fluchtende Schneidmarkierung auf, die beispielsweise als Schneidkante ausgebildet sein kann. Mit Hilfe der Schneidmarkierung kann also auch die Schaumkunststoffplatte entsprechend der Sollbruchstelle in der Wärmeleitplatte in zwei Teile zerteilt bzw. zerschnitten werden. Bei Bedarf bzw. entsprechend den räumlichen Gegebenheiten kann also die erfindungsgemäße Platte durch Auftrennen bzw. Aufbrechen der Sollbruchstelle in der Wärmeleitplatte und zweckmäßigerweise durch Zerteilen bzw. Schneiden der darunter angeordneten Isolierplatte in zwei kleinere Plattenteile aufgetrennt werden. Der Erfindung liegt insoweit die Erkenntnis zugrunde, dass es zweckmäßig ist, die Sollbruchstelle in der Wärmeleitplatte vorzusehen, die im Vergleich zu der Isolierplatte in der Regel den Plattenbestandteil mit der höheren Dichte bildet. Es liegt auch im Rahmen der Erfindung, dass die Wärmeleitplatte mehrere - zweckmäßigerweise lineare - Sollbruchstellen aufweist und die zugeordnete Schaumkunststoffplatte dann bevorzugt mit den Sollbruchstellen fluchtende Schneidmarkierungen hat. Dann kann die Platte auch in mehrere kleine Plattenteile aufgetrennt werden.

Nach besonders bevorzugter Ausführungsform der Erfindung ist die Isolierplatte bzw. Schaumkunststoffplatte mit zumindest einer an ihrer Rückseite werksseitig fixierten Verstärkungsschicht verstärkt. Alternativ oder zusätzlich dazu ist die Isolierplatte mit zumindest einem die Isolierplatte zumindest teilweise durchsetzenden Verstärkungselement verstärkt und/oder weist die Wärmeleitplatte zur Verstärkung der Platte quer zu den Kanälen für die Aufnahme der Rohre verlaufende Verstärkungssicken auf. Besonders bevorzugt ist die Ausführungsform mit der rückseitigen Verstärkungsschicht. Empfohlenermaßen ist die Verstärkungsschicht stoffschlüssig mit der Rückseite der Isolierplatte verbunden und vorzugsweise an die Rückseite der Isolierplatte angeklebt. Es liegt im Rahmen der Erfindung, dass die Verstärkungsschicht den Großteil der rückseitigen Fläche der Isolierplatte bedeckt.

Zweckmäßigerweise ist die Verstärkungsschicht für die Isolierplatte ein Gewebe und/oder ein Gewirk und/oder ein Vlies und/oder eine Folie bzw. Kunststofffolie. Wenn ein Gewebe als Verstärkungsschicht eingesetzt wird, handelt es sich vorzugsweise um ein Glasfasergewebe oder um ein Kunststofffasergewebe, insbesondere um ein Gewebe aus Polyethylentherephthalat-Fasern (PET-Fasern). Wenn ein Vlies als Verstärkungsschicht verwendet wird, handelt es sich bevorzugt um ein Glasfaservlies oder um ein Spinnvlies aus Kunststofffasern bzw. Kunststofffilamenten. Zweckmäßigerweise ist die Dicke der Verstärkungsschicht geringer als die Dicke der Isolierplatte.

Es liegt im Rahmen der Erfindung, dass ein Rohr für das Wärmeträgermedium schlangenförmig in der erfindungsgemäßen Platte verlegt ist. Das Rohr weist dann geradlinige Rohrabschnitte und bogenförmige Rohrumlenkabschnitte auf. Vorzugsweise sind in der erfindungsgemäßen Platte Umlenkungskanäle für die Rohrumlenkabschnitte vorgesehen. Nach sehr bevorzugter Ausführungsform der Erfindung ist die Isolierplatte bzw. Schaumkunststoffplatte mit einstückig angeformten Kopfteilen ausgestattet, in denen Umlenkungskanäle für die Rohre vorgesehen sind. Nach einer alternativen Ausführungsform der Erfindung sind zumindest an den Stirnseiten der Isolierplatte separate Kopfteile angeschlossen, in denen Umlenkungskanäle für die Rohre vorgesehen sind. Empfohlenermaßen sind diese separaten Kopfteile über Formschlusselemente formschlüssig an die Isolierplatte bzw. Schaumkunststoffplatte angeschlossen.

Eine sehr bevorzugte Ausführungsform ist dadurch gekennzeichnet, dass die Platte zumindest bereichsweise eine rückseitige Klebeschicht aufweist, mit welcher Klebeschicht die Platte an einem Untergrund positionierbar bzw. fixierbar ist. Wenn nach bevorzugter Ausführungsform eine rückseitige Verstärkungsschicht vorgesehen ist, kann die Klebeschicht sich auf dieser Verstärkungsschicht befinden. Die Ausführungsform mit der rückseitigen Klebeschicht eignet sich insbesondere für die Montage der erfindungsgemäßen Platten an Wänden und/oder Decken von Räumen bzw. Gebäuden. Wenn separate Kopfstücke mit Umlenkungskanälen vorgesehen sind, weisen zweckmäßigerweise auch diese Kopfstücke zumindest bereichsweise eine rückseitige Klebeschicht auf.

Es liegt im Übrigen im Rahmen der Erfindung, dass die erfindungsgemäße Platte Befestigungsöffnungen und/oder Befestigungsmittel für die Fixierung der Platte an einem Untergrund aufweist, insbesondere für die Verschraubung an Wänden und/oder Decken. Vorzugsweise ist im Bereich einer Befestigungsöffnung und/oder eines Befestigungsmittels zumindest ein Stützelement in der Isolierplatte bzw. Schaumkunststoffplatte vorgesehen. Mit dem Stützelement wird eine lokale Stabilisierung der Isolierplatte beim Fixieren der Platte, insbesondere beim Verschrauben an einem Untergrund erreicht. Bei dem Stützelement kann es sich insbesondere um ein U-förmiges Stützelement handeln, das mit seinen U-Schenkeln in die Isolierplatte bzw. Schaumkunststoffplatte eingedrückt ist, wobei sich die U-Schenkel dann zweckmäßigerweise auf dem Untergrund abstützen, an dem die Platte fixiert wird. Die U-Basis des U-förmigen Stützelementes liegt dann bevorzugt an der Wärmeleitplatte an.

Im Zuge der Herstellung und Montage einer erfindungsgemäßen mehrschichtigen Platte zum Heizen und/oder Kühlen eines Gebäudes wird nach besonders bevorzugter Ausführungsform werksseitig eine Isolierplatte, insbesondere Schaumkunststoffplatte, vorderseitig mit einer Wärmeleitplatte verbunden, welche Wärmeleitplatte zumindest einen Kanal für die Aufnahme zumindest eines Rohres für ein Wärmeträgermedium aufweist und zumindest ein Rohr für das Wärmeträgermedium wird erst am Montageort der Platte in die Platte eingebracht bzw. eingepasst. Die Einbringung bzw. Einpassung des zumindest einen Rohres erfolgt dabei durch Verrastung mit Hilfe der erfindungsgemäßen Rastnasen. Die Isolierplatte bzw. Schaumkunststoffplatte wird zweckmäßigerweise werksseitig mit der Wärmeleitplatte verklebt. Es ist auch eine Klemmverbindung zwischen Isolierplatte bzw. Schaumkunststoffplatte und Wärmeleitplatte möglich. - Montageort meint im Rahmen der Erfindung den Ort bzw. den Raum, in dem die erfindungsgemäße Platte an einer Wand, einer Decke oder an einem Boden montiert werden soll.

Gemäß sehr bevorzugter Ausführungsform der Erfindung wird die Platte zunächst an der zugeordneten Wand oder an der zugeordneten Decke oder an dem zugeordneten Boden positioniert und fixiert und erst danach wird zumindest ein Rohr in die Platte eingebracht bzw. eingepasst. Zweckmäßigerweise wird die Platte zunächst mittels zumindest einer rückseitigen Klebeschicht positioniert und anschließend mit Befestigungsmitteln fixiert und danach wird das zumindest eine Rohr in die Platte eingebracht bzw. eingerastet. Die Fixierung der Platte erfolgt vorzugsweise durch Verschraubung. Diese Verschraubung wird insbesondere an Wänden und/oder Decken eines Raumes durchgeführt, an denen die erfindungsgemäße Platte montiert werden soll.

Der Erfindung liegt die Erkenntnis zugrunde, dass mit einer erfindungsgemäßen mehrschichtigen Platte eine einfache, problemlose und zwangfreie Montage der Rohre an den Platten möglich ist. Das gilt insbesondere bei einer Montage der erfindungsgemäßen Platten an Wänden oder Decken und vor allem dann, wenn die Rohre erst am Montageort und vorzugsweise im bereits positionierten und/oder fixierten Zustand der Platte eingebracht bzw. eingerastet werden. Beim Einpassen der Rohre am Montageort können nachteilhafte Beeinträchtigungen bzw. Beschädigungen der Platte effektiv vermieden werden. Hervorzuheben ist auch, dass durch die erfindungsgemäße Ausbildung der Platte ein funktionssicherer Halt der Rohre an den Platten sichergestellt ist. Die erfindungsgemäße Ausgestaltung ermöglicht auch die problemlose Montage relativ großflächiger Plattenelemente. Es ist auch darauf hinzuweisen, dass die erfindungsgemäße Platte auf verhältnismäßig einfache und wenig aufwendige sowie kostengünstige Weise herstellbar ist. Mit den vorzugsweise vorgesehenen Sollbruchstellen in den Wärmeleitplatten ist eine besonders flexible und zügige Montage der Platten möglich.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf eine erfindungsgemäße mehrschichtige Platte,
- Fig. 2: einen Schnitt A-A durch den Gegenstand gemäß Fig. 1,
- Fig. 3: einen vergrößerten Ausschnitt B aus der Fig. 2,
- Fig. 4: eine Ansicht eines separaten Kopfteils für die erfindungsgemäße Platte und
- Fig. 5: eine schematische Darstellung einer mit erfindungsgemäßen Platten realisierten Wandheizung.

Die Figuren zeigen erfindungsgemäße mehrschichtige Platten 1 zum Heizen und/oder Kühlen von Gebäuden bzw. von Räumen in Gebäuden. Eine erfindungsgemäße mehrschichtige Platte 1 weist eine Wärmeleitplatte 2 aus einem Material hoher Wärmeleitfähigkeit auf. Vorzugsweise und im Ausführungsbeispiel handelt es sich um eine Wärmeleitplatte 2 aus Aluminiumblech. In der Wärmeleitplatte 2 ist eine Mehrzahl von Kanälen 3 für die Aufnahme von Rohren 4 vorgesehen. Die Rohre 4 werden von einem Wärmeträgermedium durchströmt. Die Wärmeleitplatte 2 ist mit ihrer Rückseite bzw. mit ihrer Unterseite an eine Isolierplatte angeschlossen, die vorzugsweise und im Ausführungsbeispiel als Schaumkunststoffplatte 5 ausgeführt ist.

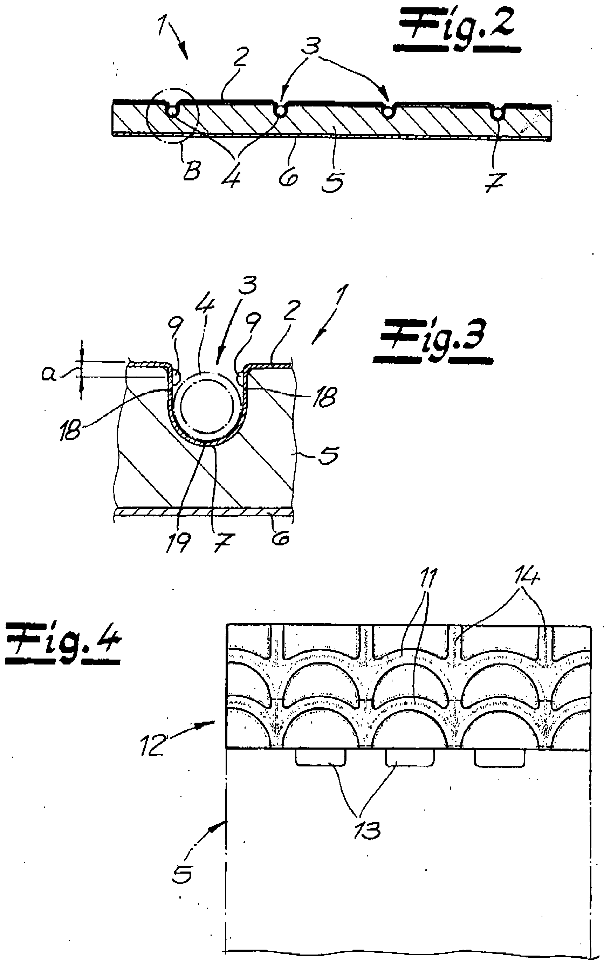

Erfindungsgemäß weisen die Kanäle 3 der Wärmeleitplatte 2 an ihren beiden gegenüberliegenden Kanalwandungen 18 jeweils eine Mehrzahl von Rastnasen 9 für eine Rastaufnahme der Rohre 4 auf. Vorzugsweise und im Ausführungsbeispiel besteht ein Kanal 3 aus einem im Querschnitt halbkreisförmigen Kanalboden 19 sowie aus in den Bereichen außerhalb der Rastnasen 9 parallelen gegenüberliegenden Kanalwandungen 18. Die Rastnasen 9 sind in Längsrichtung des zugeordneten Kanals 3 an jeder Kanalwandung 18 verteilt hintereinander angeordnet. Diese Rastnasen 9 ermöglichen ein einfaches Verrasten und funktionssicheres Halten der Rohre 4 in den Kanälen 3. Insbesondere in der Fig. 3 ist ein in einen Kanal 3 eingerastetes Rohr 4 erkennbar.

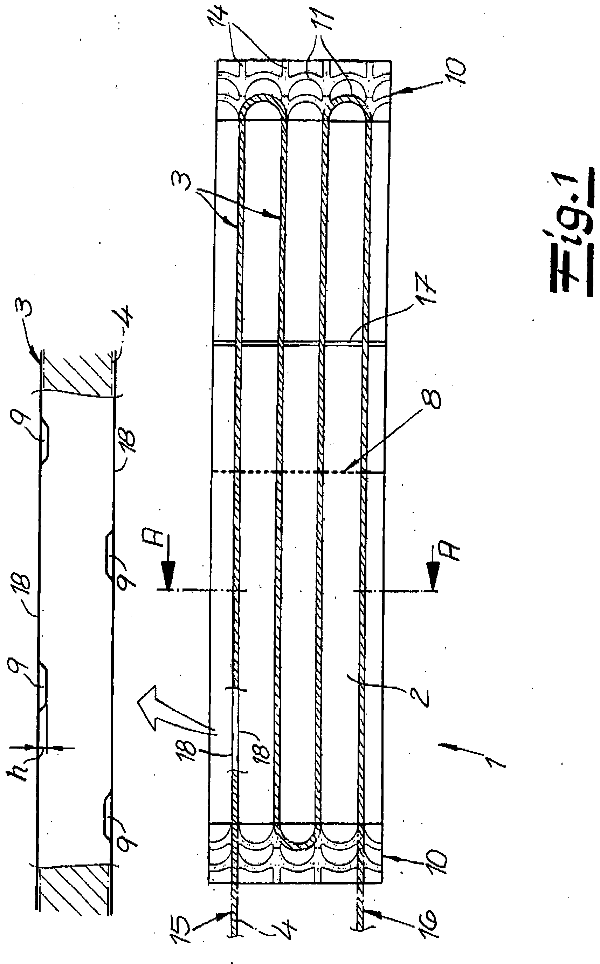

Zweckmäßigerweise sind die Rastnasen 9 aus der Wärmeleitplatte 2 ausgeformt. In Fig. 1 ist erkennbar, dass die Rastnasen 9 an der einen Kanalwandung 18 versetzt zu den Rastnasen 9 der gegenüberliegenden Kanalwandung 18 angeordnet. Dabei sind die Rastnasen 9 an der einen Kanalwandung 18 jeweils in der Mitte des Abstandes zweier Rastnasen 9 der gegenüberliegenden Kanalwandung 18 angeordnet. Die Rastnasen 9 an einer Kanalwandung 18 mögen im Ausführungsbeispiel bezüglich der Längserstreckung des zugeordneten Kanals 3 einen gegenseitigen Abstand von 60 mm aufweisen. Zweckmäßigerweise haben die Rastnasen 9 in Längsrichtung des zugeordneten Kanals 3 eine Länge von 8 bis 10 mm. Die Höhe h der Rastnasen 9 in Richtung zur Kanalmitte mag im Ausführungsbeispiel 0,8 bis 1 mm betragen. Der Abstand a zur Oberfläche der Wärmeleitplatte 2 (außerhalb der Kanäle) mag im Ausführungsbeispiel 2 mm betragen.

Es liegt im Übrigen im Rahmen der Erfindung, dass die erfindungsgemäße Platte 1 ohne in den Kanälen 3 aufgenommene Rohre 4 werksseitig gefertigt wird und dass die Rohre 4 erst am Montageort in die Kanäle 3 der Platte 1 eingebracht werden. Die erfindungsgemäße Platte 1 eignet sich insbesondere für die Montage an Wänden oder Decken eines Raumes bzw. eines Gebäudes. Dabei werden die erfindungsgemäßen Platten 1 zweckmäßigerweise zunächst an dem zugeordneten Untergrund (Wand, Decke oder Boden) positioniert und bevorzugt auch fixiert und anschließend werden die Rohre 4 in die Kanäle 3 eingebracht bzw. eingerastet.

Der Fig. 2 ist entnehmbar, dass die Kanäle 3 für die Rohre 4 aus der Rückseite der Wärmeleitplatte 2 vorspringen und in Aufnahmekanäle 7 eingreifen, die in der Vorderseite bzw. Oberseite der Schaumkunststoffplatte 5 vorgesehen sind. Zweckmäßigerweise und im Ausführungsbeispiel greifen die Kanäle 3 der Wärmeleitplatte 2 formschlüssig in die Aufnahmekanäle 7 der Schaumkunststoffplatte 5 ein. In der Fig. 2 ist erkennbar, dass die Rückseite der Wärmeleitplatte 2 flächig an der Vorderseite der Schaumkunststoffplatte 5 aufliegt.

Nach besonders bevorzugter Ausführungsform und im Ausführungsbeispiel ist die Isolierplatte bzw. Schaumkunststoffplatte 5 mit einer an ihrer Rückseite fixierten Verstärkungsschicht 6 verstärkt. Zweckmäßigerweise wird diese Verstärkungsschicht 6 bereits werksseitig bei der Herstellung der mehrschichtigen Platte 1 aufgebracht und vorzugsweise an die Rückseite der Schaumkunststoffplatte 5 angeklebt.

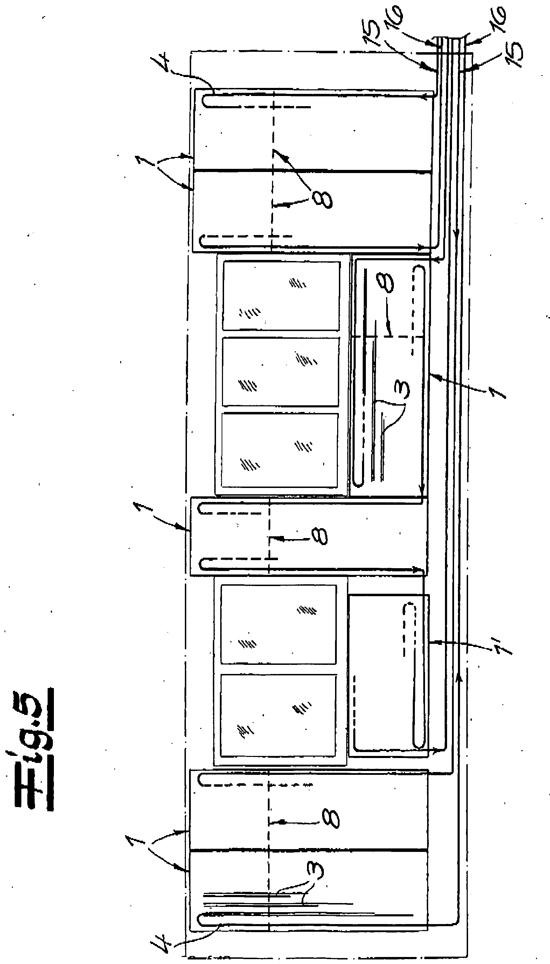

Gemäß empfohlener Ausführungsform und im Ausführungsbeispiel weist die Wärmeleitplatte 2 eine lineare Sollbruchstelle 8 auf (Fig. 1 und 5). Durch Aufbrechen der Sollbruchstelle 8 der Wärmeleitplatte 2 und durch Schneiden der darunter befindlichen Schaumkunststoffplatte 5 entlang einer mit der Sollbruchstelle 8 fluchtenden Linie können kleinere Plattenteile 1' erhalten werden. Wie der Fig. 5 entnehmbar ist, ermöglichen diese abgetrennten kleineren Platten 1' eine flexible und vollflächige Verlegung von Heiz- bzw. Kühlkreisläufen.

Zweckmäßigerweise und im Ausführungsbeispiel (Fig. 1) weist die Wärmeleitplatte 2 zur Verstärkung der Platte 1 quer zu den Kanälen 3 verlaufende Verstärkungssicken 17 auf. In der Fig. 1 ist der Einfachheit halber lediglich eine Verstärkungssicke 17 eingezeichnet worden. Es liegt im Rahmen der Erfindung, dass eine Mehrzahl quer zu den Kanälen 3 verlaufende Verstärkungssicken 17 vorgesehen ist, wobei die Verstärkungssicken 17 zweckmäßigerweise parallel zueinander verlaufen. Vorzugsweise sind die Verstärkungssicken 17 zur Schaumkunststoffplatte 5 hin aus der Wärmeleitplatte ausgeformt.

Im Ausführungsbeispiel nach Fig. 1 weist die Schaumkunststoffplatte 5 an ihren Stirnseiten einstückig angeschlossene Kopfteile 10 auf, in denen bogenförmige Umlenkungskanäle 11 für die Rohre 4 vorgesehen sind. Mit diesen Umlenkungskanälen 11 wird im Ausführungsbeispiel eine Umlenkung der Rohre 4 um 180° erreicht. In der Ausführungsvariante gemäß Fig. 1 sind die Kopfteile 10 also Bestandteil der Schaumkunststoffplatte 5.

Gemäß einer alternativen Ausführungsform können auch separate Kopfteile 12 an den Stirnseiten der Schaumkunststoffplatte 5 angeschlossen werden. In der Fig. 4 ist ein solches separates Kopfteil 12 dargestellt. Das separate Kopfteil 12 weist Zapfen 13 als Formschlusselemente auf, die in entsprechende komplementäre nicht dargestellte Ausnehmungen der zugeordneten Schaumkunststoffplatte 5 eingreifen können.

In einem angeformten Kopfteil 10 und in einem separaten Kopfteil 12 sind im Ausführungsbeispiel nach den Figuren neben den Umlenkungskanälen 11 für die Rohre 4 auch geradlinige Anschlusskanäle 14 vorhanden, die der geradlinigen Rohrfortführung dienen können und insbesondere der Anbindung von Vorlauf 15 und Rücklauf 16 des Heizkreislaufes bzw. Kühlkreislaufes. Das ist in den Fig. 1 und 5 dargestellt worden. Die Kopfteile 10, 12 ermöglichen also wahlweise die Umlenkung der Rohre 4 oder die gradlinige Fortführung der Rohre 4.

In der Fig. 5 ist die Verwirklichung einer Wandheizung mit erfindungsgemäßen mehrschichtigen Platten 1 dargestellt. Die Platten 1 werden dazu an nicht dargestellten Wandprofilen zweckmäßigerweise durch Verschraubung fixiert. Vorzugsweise werden erst nach Fixierung der erfindungsgemäßen Platten 1 die Rohre 4 in die Platten 1 eingebracht. Anschließend wird zweckmäßigerweise eine in der Fig. 5 nicht dargestellte Wandbeplankung vor die Platten 1 vorgesetzt.

## Patentansprüche

1. Mehrschichtige Platte (1) zum Heizen und/oder Kühlen von Gebäuden, wobei zumindest eine Wärmeleitplatte (2) aus einem Material hoher Wärmeleitfähigkeit vorgesehen ist,
wobei die Wärmeleitplatte (2) zumindest einen Kanal (3) für die Aufnahme zumindest eines Rohres (4) für ein Wärmeträgermedium aufweist,
wobei die Wärmeleitplatte (2) mit ihrer Rückseite an eine Isolierplatte angeschlossen ist bzw. in eine Isolierplatte eingebettet ist,
**dadurch gekennzeichnet, dass** der zumindest eine Kanal (3) der Wärmeleitplatte (2) an seinen gegenüberliegenden Kanalwandungen (18)
entweder jeweils eine Mehrzahl von Rastnasen (9) für eine verrastende Aufnahme bzw. Rastaufnahme des zumindest einen Rohres (4) aufweist,
oder die Rastnasen (9) an der Isolierplatte vorgesehen sind bzw. Bestandteile der Isolierplatte sind und durch in den Kanalwandungen (18) eines Kanals (3) vorgesehene Durchgriffsöffnungen in den Kanal (3) ragen,
wobei die Rastnasen (9) an der einen Kanalwandung (18) versetzt zu den Rastnasen (9) der gegenüberliegenden Kanalwandung (18) angeordnet sind
und wobei die Wärmeleitplatte (2) zumindest 60 % der Oberfläche der Isolierplatte abdeckt.

2. Mehrschichtige Platte nach Anspruch 1, wobei die Platte (1) ohne aufgenommenes Rohr (3) bzw. ohne aufgenommene Rohre (4) werksseitig gefertigt ist und für die Einbringung des Rohres bzw. der Rohre (4) in die Kanäle (3) am Montageort der Platte (1) vorgesehen ist.

3. Mehrschichtige Platte nach einem der Ansprüche 1 oder 2, wobei die Rastnasen (9) an einer Kanalwandung (18) bezüglich der Längserstreckung des Kanals (3) einen gegenseitigen Abstand von 30 bis 90 mm, vorzugsweise von 40 bis 80 mm und bevorzugt von 50 bis 70 mm aufweisen.

4. Mehrschichtige Platte nach einem der Ansprüche 1 bis 3, wobei die Rastnasen (9) in Längsrichtung des Kanals (3) eine Länge von 5 bis 10 mm, vorzugsweise von 8 bis 10 mm aufweisen.

5. Mehrschichtige Platte nach einem der Ansprüche 1 bis 4, wobei die Höhe h der Rastnasen in Richtung zur Kanalmitte hin 0,4 bis 1,2 mm, vorzugsweise 0,5 bis 1,1 mm und bevorzugt 0,6 bis 1,0 mm beträgt.

6. Mehrschichtige Platte nach einem der Ansprüche 1 bis 5, wobei die Kanäle (3) für die Rohre (4) aus der Rückseite der Wärmeleitplatte (2) vorspringen und in Aufnahmekanäle (7) eingreifen, die in der Vorderseite der Isolierplatte vorgesehen sind.

7. Mehrschichtige Platte nach einem der Ansprüche 1 bis 6, wobei die Isolierplatte mit zumindest einer an ihrer Rückseite werksseitig fixierten Verstärkungsschicht (6) verstärkt ist.

8. Mehrschichtige Platte nach Anspruch 7, wobei die Verstärkungsschicht (6) stoffschlüssig mit der Rückseite der Isolierplatte verbunden ist, vorzugsweise an die Rückseite der Isolierplatte angeklebt ist.

9. Mehrschichtige Platte nach einem der Ansprüche 1 bis 8, wobei die Platte (1) zumindest bereichsweise zumindest eine rückseitige Klebeschicht aufweist, mit welcher Klebeschicht die Platte (1) an einem Untergrund, insbesondere an einer Wand oder einer Decke eines Gebäuderaumes positionierbar und fixierbar ist.

10. Mehrschichtige Platte nach einem der Ansprüche 1 bis 9, wobei die Wärmeleitplatte (2) zumindest eine Sollbruchstelle (8) aufweist.

11. Mehrschichtige Platte nach einem der Ansprüche 1 bis 10, wobei die Wärmeleitplatte (2) aus einem Metall und/oder aus Kohlenstoff, insbesondere aus Graphit besteht.

## Claims

1. A multilayer board (1) for heating and/or cooling buildings, wherein at least one heat conducting plate (2) of a material with high thermal conductivity is provided,
wherein the heat conducting plate (2) features at least one channel (3) for accommodating at least one pipe (4) for a heat transfer medium, and
wherein the heat conducting plate (2) is respectively connected to an insulating board or embedded in an insulating board with its rear side,
**characterized in that** the opposite channel walls (18) of the at least one channel (3) of the heat conducting plate (2)
either respectively feature a plurality of snap-in tabs (9) in order to realize a latching receptacle or latch receptacle for the at least one pipe (4)
or the snap-in tabs (9) are respectively provided on the insulating board or form part of the insulating board and protrude into the channel (3) through openings provided in the channel walls (18) of the channel (3),
wherein the snap-in tabs (9) on one channel wall (18) are offset relative to the snap-in tabs (9) on the opposite channel wall (18),
and wherein the heat conducting plate (2) covers at least 60 % of the surface of the insulating board.

2. The multilayer board according to claim 1, wherein the board (1) is manufactured at the factory without a pipe (3) or pipes (4) accommodated therein, and wherein the board is designed for introducing the pipe or pipes (4) into the channels (3) at the installation site of the board (1).

3. The multilayer board according to one of claims 1 or 2, wherein the snap-in tabs (9) on a channel wall (18) are spaced apart from one another in the longitudinal direction of the channel (3) by a distance of 30 to 90 mm, preferably 40 to 80 mm, particularly 50 to 70 mm.

4. The multilayer board according to one of claims 1 to 3, wherein the snap-in tabs (9) have a length of 5 to 10 mm, preferably 8 to 10 mm, in the longitudinal direction of the channel (3).

5. The multilayer board according to one of claims 1 to 4, wherein the height h of the snap-in tabs in the direction toward the channel center amounts to 0.4 to 1.2 mm, preferably 0.5 to 1.1 mm, particularly 0.6 to 1.0 mm.

6. The multilayer board according to one of claims 1 to 5, wherein the channels (3) for the pipes (4) protrude from the rear side of the heat conducting plate (2) and engage into receptacle channels (7) provided in the front side of the insulating board.

7. The multilayer board according to one of claims 1 to 6, wherein the insulating board is reinforced with at least one reinforcing layer (6) that is fixed on its rear side at the factory.

8. The multilayer board according to claim 7, wherein the reinforcing layer (6) is integrally connected to the rear side of the insulating board, preferably bonded on the rear side of the insulating board.

9. The multilayer board according to one of claims 1 to 8, wherein the board (1) features at least in certain areas an adhesive layer on at least its rear side, and wherein the board (1) can be positioned and fixed on a substructure, particularly on a wall or a ceiling of a room in a building, by means of said adhesive layer.

10. The multilayer board according to one of claims 1 to 9, wherein the heat conducting plate (2) features at least one predetermined breaking point (8).

11. The multilayer board according to one of claims 1 to 10, wherein the heat conducting plate (2) consists of a metal and/or of carbon, particularly of graphite.

## Revendications

1. Panneau multicouches (1) destiné à chauffer et/ou à refroidir des bâtiments, au moins un panneau thermoconducteur (2) étant prévu dans une matière à thermoconductibilité élevée,
le panneau thermoconducteur (2) comportant au moins un canal (3) destiné à recevoir au moins un tube (4) pour un fluide caloporteur,
par sa face arrière, le panneau thermoconducteur (2) étant raccordé sur un panneau isolant ou incorporé dans un panneau isolant,
**caractérisé en ce que** sur ses parois de canal (18) opposées, l'au moins un canal (3) du panneau thermoconducteur (2)
soit : comporte chaque fois une pluralité de tenons d'enclenchement (9) pour un logement par enclenchement ou un encliquetage de l'au moins un tube (4),
ou : les tenons d'enclenchement (9) sont prévus sur le panneau isolant ou sont des composants du panneau isolant et saillent dans le canal (3) à travers des orifices de passage prévus dans les parois de canal (18) d'un canal (3),
les tenons d'enclenchement (9) étant placés sur l'une des parois de canal (18) en étant décalés par rapport aux tenons d'enclenchement (9) de la paroi de canal (18) opposée
et le panneau thermoconducteur (2) recouvrant au moins 60 % de la surface du panneau isolant.

2. Panneau multicouches selon la revendication 1, le panneau (1) étant fabriqué en usine sans tube (3) réceptionné ou sans tubes (4) réceptionnés et étant prévu pour l'introduction du tube ou des tubes (4) dans les canaux (3) sur le site de montage des panneaux (1).

3. Panneau multicouches selon l'une quelconque des revendications 1 ou 2, sur une paroi de canal (18), les tenons d'enclenchement (9) présentant par rapport à l'extension longitudinale du canal (3) un écart mutuel de 30 à 90 mm, de préférence de 40 à 80 mm et de manière préférentielle, de 50 à 70 mm.

4. Panneau multicouches selon l'une quelconque des revendications 1 à 3, dans la direction longitudinale du canal (3), les tenons d'enclenchement (9) présentant une longueur de 5 à 10 mm, de préférence de 8 à 10 mm.

5. Panneau multicouches selon l'une quelconque des revendications 1 à 4, la hauteur h des tenons d'enclenchement dans la direction du centre du canal étant de 0,4 à 1,2 mm, de préférence de 0,5 à 1,1 mm et de manière préférentielle de 0,6 à 1,0 mm.

6. Panneau multicouches selon l'une quelconque des revendications 1 à 5, pour les tubes (4), les canaux (3) saillant hors de la face arrière du panneau thermoconducteur (2) et s'engageant dans des canaux récepteurs (7) qui sont prévus dans la face avant du panneau isolant.

7. Panneau multicouches selon l'une quelconque des revendications 1 à 6, le panneau isolant étant renforcé par au moins une couche de renfort (6) fixée en usine sur sa face arrière.

8. Panneau multicouches selon la revendication 7, la couche de renfort (6) étant reliée par matière avec la face arrière du panneau isolant, de préférence étant collée sur la face arrière du panneau isolant.

9. Panneau multicouches selon l'une quelconque des revendications 1 à 8, le panneau (1) comportant au moins par zones au moins une couche adhésive arrière, à l'aide de laquelle couche adhésive le panneau (1) peut être positionné ou fixé sur un mur ou un plafond d'une pièce d'un bâtiment.

10. Panneau multicouches selon l'une quelconque des revendications 1 à 9, le panneau thermoconducteur (2) comportant au moins une zone de rupture théorique (8).

11. Panneau multicouches selon l'une quelconque des revendications 1 à 10, le panneau thermoconducteur (2) étant constitué d'un métal et/ou d'un carbone, notamment de graphite.
